# EUROPÄISCHE PATENTSCHRIFT

(11) **EP 0 981 473 B1**
(45) Veröffentlichungstag und Bekanntmachung des Hinweises auf die Patenterteilung: **15.05.2002**
(21) Anmeldenummer: 99907483.4
(22) Anmeldetag: 02.02.1999
(51) Int. Cl.: B62D 5/30

(54) **LENKSYSTEM**
STEERING SYSTEM
SYSTEME DE DIRECTION

(30) Priorität: 07.02.1998 DE 19805015
(43) Veröffentlichungstag der Anmeldung: 01.03.2000
(73) Patentinhaber: DaimlerChrysler AG, 70567 Stuttgart (DE)
(72) Erfinder: BOHNER, Hubert, D-71032 Böblingen (DE); MOSER, Martin, D-70736 Fellbach (DE)
(86) Internationale Anmeldenummer: EP9900683
(87) Internationale Veröffentlichungsnummer: WO9939967

(56) Entgegenhaltungen:
- WO-A-90/12723
- DE-C- 19 540 956

## Beschreibung

Die Erfindung betrifft ein Lenksystem für ein nicht spurgebundenes Kraftfahrzeug, dessen gelenkte Fahrzeugräder
- bei Normalbetrieb mit einer Lenkhandhabe bzw. einem Lenkhandrad über eine sich ständig auf korrekte Funktion überprüfende elektronische Regelanordnung wirkungsmäßig verbunden sind, welche einen mit den gelenkten Fahrzeugrädern zu deren Lenkverstellung verbundenen Lenkstellantrieb regelt und dazu mit einem von der Lenkhandhabe bzw. vom Lenkhandrad betätigten Lenkwinkel-Sollwertgeber sowie einem mit den gelenkten Fahrzeugrädern betätigten Lenkwinkel-Istwertgeber verbunden ist und vorzugsweise auch einen mit der Lenkhandhabe bzw. dem Lenkhandrad zur Simulation eines Lenkwiderstandes verbundenen Handkraftsteller regelt und dazu mit einem übertragene Kräfte zwischen Lenkstellantrieb und gelenkten Fahrzeugrädern erfassenden Handkraft-Sollwertgeber sowie einem übertragene Kräfte zwischen Handkraftsteller und Lenkhandrad erfassenden Handkraft-Istwertgeber verbunden ist,
- bei anormalem Betrieb bzw. Notfallbetrieb zur Lenkverstellung mit der Lenkhandhabe bzw. dem Lenkhandrad mechanisch zwangsgekoppelt werden, indem eine bei Normalbetrieb offene Kupplung in einer zwischen Lenkhandhabe bzw. Lenkhandrad und gelenkten Fahrzeugrädern angeordneten mechanischen Lenkgetriebeanordnung schließt.

Ein derartiges Lenksystem ist Gegenstand der DE 195 46 733 C1 sowie der DE 690 22 848 T2.

Im übrigen ist aus der DE 39 19 990 A1 ein Lenksystem bekannt, bei dem, beispielsweise bei Seitenwind, automatische Lenkkorrekturen erfolgen können.

Die DE 37 14 833 A1 betrifft eine Servolenkung mit hydraulischem und elektrischem Servomotor, wobei der elektrische Servomotor bei Versagen des hydraulischen Servomotors über eine Kupplung wirksam geschaltet wird.

Für zukünftige Kraftfahrzeuge werden Lenksysteme entwickelt, die nach dem Konzept "Steer by wire" arbeiten, zumindest bei Normalbetrieb. Derartige Systeme bieten den grundsätzlichen Vorteil, daß sie zumindest hinsichtlich der Regelanordnung sowie der zugehörigen Sensorik ohne konstruktive Abänderungen für unterschiedlichste Fahrzeuge geeignet sind. Durch entsprechende Programmierung kann einerseits praktisch jedes Übersetzungsverhältnis zwischen dem Stellhub der Lenkhandhabe und der Lenkwinkeländerung der gelenkten Fahrzeugräder verwirklicht werden. Darüber hinaus besteht die Möglichkeit, die Regelanordnung mit zusätzlichen Sensoren zu verbinden, um vorzugebende Parameter, z.B. Seitenwindeinflüsse, selbsttätig zu berücksichtigen bzw. auszuregeln.

Um das erforderliche Maß an Sicherheit bei Systemfehlern gewährleisten zu können, kann vorgesehen sein, daß beim Auftreten eines Fehlers in der Regelanordnung bzw, beim Ausfall von Signalen, die von der Regelanordnung ausgewertet werden, automatisch eine Betriebsweise für anormalen Betrieb bzw. Notfallbetrieb eingeschaltet wird. Bei dieser Betriebsweise kann dann eine Zwangskopplung zwischen Lenkhandhabe und gelenkten Fahrzeugrädern vorgesehen sein, so daß das Lenksystem prinzipiell nach Art einer herkömmlichen Lenkung arbeitet, wobei allerdings die bei herkömmlichen Lenkungen übliche mechanische Lenksäule gegebenenfalls durch andere mechanische Systeme oder auch durch hydraulische, insbesondere hydrostatische Systeme ersetzt sein kann.

Aufgabe der Erfindung ist nun, für den "Steer by wire"-Betrieb eine erhöhte Sicherheit zu gewährleisten.

Diese Aufgabe wird erfindungsgemäß dadurch gelöst, daß eine Sensorik zur Erfassung des geöffneten Zustandes der Kupplung vorhanden ist.

Dadurch kann vermieden werden, daß durch fehlerhaftes Schließen der Kupplung kritische Betriebszustände auftreten können. Bei einer Lenkung der eingangs angegebenen Art liegt zwischen dem Stellhub der Lenkhandhabe und der Lenkwinkeländerung der gelenkten Fahrzeugräder bei geschlossener Kupplung regelmäßig ein anderes Übersetzungsverhältnis als bei geöffneter Kupplung vor, d.h. bei Normalbetrieb. Sollte bei diesem Normalbetrieb die Kupplung unbemerkt ganz oder teilweise schließen, könnten Stellbewegungen der gelenkten Fahrzeugräder zu einer unerwünschten Rückwirkung auf den Lenkwinkel-Sollwertgeber führen, mit der Folge, daß dann die elektronische Regelanordnung eine entsprechende Verstellung der gelenkten Fahrzeugräder vorzunehmen sucht, wodurch dann erneut eine Verstellung des Lenkwinkel-Sollwertgeber verursacht wird. Damit können sich erhebliche Fehlsteuerungen "aufschaukeln".

Gemäß einer besonders bevorzugten Ausführungsform der Erfindung ist vorgesehen, daß das Lenksystem automatisch auf anormalen Betrieb bzw. Notfallbetrieb umschaltet, wenn bei Normalbetrieb ein Signal für den geöffneten Zustand der Kupplung verschwindet und/oder ein Signal für geschlossene oder schließende Kupplung auftritt.

In diesem Zusammenhang ist zweckmäßig, wenn die Kupplung ständig von einer Schließkraft beaufschlagt wird, d.h. ständig in ihren Schließzustand gedrängt wird, und durch einen nur bei Energiezufuhr wirksamen Aktuator gegen die Schließkraft auftrennbar ist.

Auf diese Weise wird eine besonders hohe Sicherheit gewährleistet, d.h. Lenkhandhabe und gelenkte Fahrzeugräder werden miteinander zwangsgekoppelt und der anormale Betrieb bzw. der Notfallbetrieb wird eingeschaltet, sobald die Sensorik "merkt", daß beim Normalbetrieb kein eindeutiges Signal für offene Kupplung vorliegt.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen beschrieben werden.

Dabei zeigt
- Fig. 1: eine schaltplanmäßige Darstellung des gesamten Lenksystems,
- Fig. 2: einen Längsschnitt einer Getriebeanordnung mit Ritzel, Zahnstange und dem Ritzel zugeordneter Kupplung und
- Fig. 3: eine der Fig. 1 entsprechende Darstellung einer Ausführungsform, bei der anstelle einer hydraulischen Kupplungsbetätigung eine elektromagnetisch betätigte Kupplung vorgesehen ist.

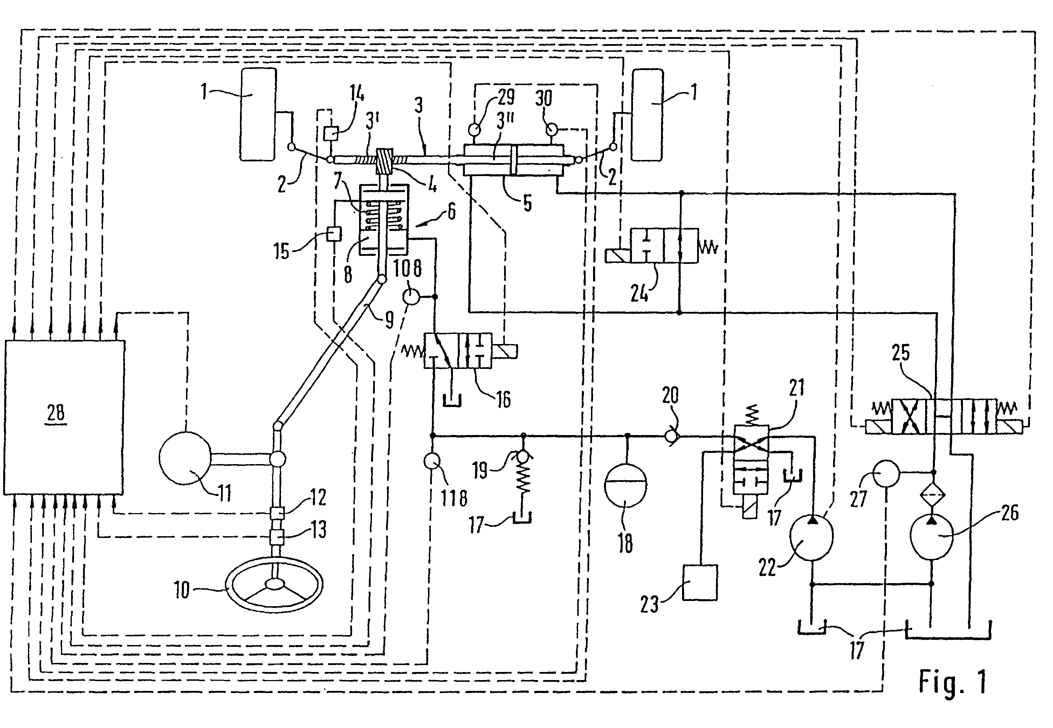

Gemäß Fig. 1 besitzt ein nicht näher dargestelltes Kraftfahrzeug lenkbare Vorderräder 1, die über Spurstangen 2 sowie eine Stange 3 miteinander lenkverstellbar gekoppelt sind. Die Stange 3 besitzt einen als Zahnstange ausgebildeten Teil 3', welcher mit einem Ritzel 4 kämmt, sowie einen als Kolbenstange eines doppeltwirkenden hydraulischen Kolben-Zylinder-Aggregates 5 ausgebildeten Teil 3".

Das Ritzel 4 ist mit einer Seite einer kraftschlüssig und/oder formschlüssig arbeitenden Kupplung 6 verbunden, welche durch ein Federaggregat 7 ständig in Schließrichtung belastet und durch Einspeisung von Hydraulikmedium in ein hydraulisches Verdrängeragggregat 8 gegen die Kraft des Federaggregates 7 geöffnet bzw. offengehalten werden kann. Die andere Seite der Kupplung 6 ist über eine vorzugsweise gelenkige Welle 9 mit einem Lenkhandrad 10 antriebsmäßig verbunden.

Der Druck im Verdrängeraggregat 8 kann durch einen Drucksensor 108 überwacht werden.

Parallel zum Lenkhandrad 10 ist ein mit der Welle 9 mechanisch zwangsgekoppelter, selbsthemmungsfreier Elektromotor 11 angeordnet, welcher bei festgehaltener Motorwelle als reiner Krafterzeuger zu arbeiten vermag und dessen Zweck weiter unten erläutert wird. Im übrigen ist an der Welle 9 bzw. zwischen Teilen der Welle 9 oder zwischen dem Lenkhandrad 10 und der Welle 9 ein Drehmomentsensor 12 angeordnet, dessen Signale die am Lenkhandrad 10 wirksame Handkraft wiedergeben.

Außerdem ist dem Lenkhandrad bzw. dem lenkhandradseitigen Bereich der Welle 9 ein Winkelsensor 13 zugeordnet, welcher in weiter unten dargestellter Weise die Funktion eines Lenkwinkel-Sollwertgebers übernimmt.

Auf der den lenkbaren Vorderrädern 1 zugeordneten Seite der Kupplung 6 ist ein Sensor 14 vorgesehen, dessen Signale den Istwert des Lenkwinkels der Vorderräder 1 wiedergeben. Dazu kann der Sensor 14 beispielsweise den zum Istwert des Lenkwinkels analogen Hub der Stange 3 erfassen.

Ein der Kupplung 6 zugeordneter Sensor 15 erfaßt den Betriebszustand der Kupplung 6, wobei vorzugsweise vorgesehen ist, daß die Signale des Sensors 15 anzeigen, ob das Verdrängeraggregat 8 seinen der Offenstellung der Kupplung 6 zugeordneten Zustand einnimmt.

Das Verdrängeraggregat 8 kann über ein Umschaltventil 16 mit einem relativ drucklosen Reservoir 17 oder einem hydraulischen Druckspeicher 18 verbunden werden, dessen Druck von einem Drucksensor 118 erfaßt wird. Das Umschaltventil 16 nimmt normal die in Fig. 1 dargestellte Lage ein und kann durch Bestromung seines Stellmagnetes in die den Druckspeicher 18 mit dem Verdrängeraggregat 8 verbindende Stellung umgeschaltet werden.

Zur Sicherung des Druckspeichers 18 ist ein zum Reservoir 17 führendes Druckbegrenzungsventil 19 vorgesehen.

Über ein nur bei Strömung in Richtung des Druckspeichers 18 öffnendes Rückschlagventil 20 sowie ein Schaltventil 21 kann der Druckspeicher 18 mit der Druckseite einer Hydraulikpumpe 22 verbunden werden, welche je nach Stellung des Schaltventiles 21 druckseitig entweder an den Druckspeicher 18 oder an ein nicht näher dargestelltes Niveauregulierungssystem 23 verbunden ist, mit dem sich der Bodenabstand des Fahrzeuges verändern bzw. regeln läßt.

Die beiden Seiten des Kolben-Zylinder-Aggregates 5 lassen sich über ein normal offenes Absperrventil 24 miteinander verbinden, derart, daß das Kolben-Zylinder-Aggregat 5 unter allen Umständen auf Freilauf geschaltet ist. Durch Bestromung seines Stellmagnetes wird das Absperrventil 24 in seine Schließlage gebracht.

Im übrigen ist das Kolben-Zylinder-Aggregat 5 mit zwei Anschlüssen eines Regelventiles 25 verbunden, welches über zwei weitere Anschlüsse mit dem Reservoir 17 bzw. mit der Druckseite einer weiteren Hydraulikpumpe 26 verbunden ist. In der vom Regelventil 25 normal eingenommenen dargestellten Lage ist das Kolben-Zylinder-Aggregat 5 auf Freilauf geschaltet. Durch Bestromung eines seiner Stellmagnete läßt sich das Regelventil 25 derart steuern, daß bei arbeitender Pumpe 26 zwischen den beiden Seiten des Kolben-Zylinder-Aggregates 5 eine mehr oder weniger große Druckdifferenz auftritt und das Kolben-Zylinder-Aggregat 5 eine entsprechende Stellkraft in der einen oder anderen Richtung erzeugt. Die Druckdifferenz und damit die Stellkraft können mit Drucksensoren 29 und 30 an den beiden Seiten des Aggregates 5 erfaßt werden.

Eine elektronische Regel- bzw. Steueranordnung ist eingangsseitig mit einem den Hydraulikdruck auf der Druckseite der Pumpe 26 erfassenden Drucksensor 27 sowie den Sensoren 12 bis 15, 29 und 30 sowie 108 und 118 verbunden. Ausgangsseitig steuert die Regelanordnung 28 den Elektromotor 11 sowie die Stellmagnete der Ventile 16,21,24 und 25 sowie gegebenenfalls die Pumpe 22.

Das in Fig. 1 dargestellte System funktioniert wie folgt:

Zunächst wird der Normalbetrieb dargestellt. In diesem Falle hat die Pumpe 22 durch zumindest vorübergehend erfolgte Umschaltung des Schaltventiles 21 in die in Fig. 1 nicht dargestellte Lage den Druckspeicher 18 auf den vom Sensor 118 überwachten Betriebsdruck geladen, bzw. der Druckspeicher 18 wird gegebenenfalls nachgeladen. Das Umschaltventil 16 nimmt ebenfalls die nicht dargestellte Lage ein, so daß das Verdrängeraggregat 8 und der Druckspeicher 18 miteinander kommunizieren und die Kupplung 6 gegen die Kraft des Federaggregates 7 in Offenstellung gehalten wird. Dementsprechend sind das Lenkhandrad 10 und die gelenkten Vorderräder 1 voneinander mechanisch entkoppelt.

Die Lenkbetätigung der Vorderräder 1 erfolgt dadurch, daß durch das Lenkhandrad 10 der Winkelsensor 13 betätigt wird, welcher an die Regelanordnung 28 ein den Lenkwinkel-Sollwert wiedergebendes Signal weiterleitet. Vom Sensor 14 erhält die Regelanordnung 28 ein den Lenkwinkel-Istwert wiedergebendes Signal. Die Regelanordnung 28 führt einen Soll-Istwert-Vergleich durch und steuert in Abhängigkeit davon das Regelventil 25. Da die Regelanordnung 28 bei normalem Betrieb außerdem den Stellmagnet des Absperrventils 24 bestromt, so daß das Absperrventil 24 seine Schließlage einnimmt, wird durch die Betätigung des Regelventiles 25 vom Kolben-Zylinder-Aggregat 5 eine mehr oder weniger große Stellkraft mit steuerbarem Richtungssinn erzeugt, derart, daß die Soll-Istwert-Abweichung ausgeregelt wird und der Istwert des Lenkwinkels an den Vorderrädern 1 dem vom Lenkhandrad über den Drehwinkelsensor 13 vorgegebenen Lenkwinkel-Sollwert entspricht.

Die Signale der den beiden Seiten des Kolben-Zylinder-Aggregates 5 zugeordneten Drucksensoren 29 und 30 lassen die zwischen diesen beiden Seiten vorliegende Druckdifferenz nach Betrag und Richtung erkennen. Diese Druckdifferenz ist eine zu den an den Vorderrädern 1 wirksamen Lenk- und Störkräften analoge Größe. In Korrelation zu diesen Lenk- und Störkräften wird nun von der Regelanordnung 28 ein Sollwert für die am Lenkhandrad 10 fühlbare Handkraft vorgegeben, deren Istwert von der Regelanordnung aus den Signalen des Drehmomentsensors 12 ermittelbar ist. In Abhängigkeit von einem Soll-Istwert-Vergleich wird der Elektromotor 11 gesteuert, so daß die am Lenkhandrad 10 fühlbare Handkraft im Ergebnis entsprechend den an den gelenkten Vorderrädern 1 wirksamen Lenk- und Störkräften variiert wird.

Die Regelanordnung 28 überprüft sich selbst sowie die mit ihr zusammenwirkenden Systemteile ständig auf korrekte Funktion, wobei auch die Plausibilität der Signale der verschiedenen Sensoren überwacht wird.

Wenn die Sicherheit des Lenksystems beim vorangehend beschriebenen Normalbetrieb nicht mehr mit Sicherheit gewährleistet werden kann, werden die Stellmagnete der Ventile 16,21 sowie 24 und 25 stromlos geschaltet. Dies hat einerseits zur Folge, daß das Verdrängeraggregat 8 der Kupplung 6 drucklos wird und die Kupplung 6 schließt. Damit sind das Lenkhandrad 10 und die lenkbaren Vorderräder 1 miteinander zur Lenkverstellung mechanisch zwangsgekoppelt. Andererseits wird durch das nunmehr geöffnete Absperrventil 24 bzw. das in offener Mittellage befindliche Ventil 25 sichergestellt, daß das Kolben-Zylinder-Aggregat 5 hydraulisch auf Freilauf geschaltet ist.

Der Normalbetrieb des Lenksystems wird beispielsweise dann beendet, wenn der vom Sensor 118 erfaßte Druck des Speichers 18 unter einen Schwellwert abfällt. Bei einem solchen Druckabfall besteht die Gefahr, daß die Kupplung 6 durch Druckeinspeisung in das Verdrängeraggregat 8 nicht mehr sicher geöffnet werden bzw. offen gehalten werden kann und sich ein undefinierter Zustand einstellt. Deshalb ist bevorzugt vorgesehen, daß das Ventil 16 in die dargestellte Lage geschaltet bzw. in der dargestellten Lage gehalten wird, wenn der Sensor 118 einen Druck unterhalb des Schwellwertes meldet. Dies ist gleichbedeutend damit, daß der Stellmagnet des Ventiles 16 elektrisch stromlos geschaltet wird bzw. bleibt.

Soweit bei Beendigung des Normalbetriebes noch hinreichende Restfunktionen der Regelung 28 zur Verfügung stehen, kann der Elektromotor 11 nunmehr als Servomotor eingesetzt werden: Die Signale des Drehmoment-Sensors 12 geben, falls vorhanden, die am Lenkhandrad 10 wirksame Handkraft an. In Abhängigkeit von dieser Handkraft läßt sich nun der Elektromotor 11 von der Regelung 28 so steuern, daß eine mehr oder weniger starke Verminderung der für die jeweiligen Lenkmanöver notwendigen Handkräfte erreicht wird.

Grundsätzlich ist es auch möglich, bei geschlossener Kupplung 6, d.h. bei mechanischer Zwangskopplung von Lenkhandrad 10 und gelenkten Vorderrädern 1, das Kolben-Zylinder-Aggregat 5 als Servomotor zu betreiben. Dazu muß der Elektromagnet des Absperrventiles 24 unter Schließung dieses Ventiles bestromt und das Regelventil 25 in Abhängigkeit von den Signalen des Drehmoment-Sensors 12 mittels der Regelung 28 derart betätigt werden, daß das Kolben-Zylinder-Aggregat 5 einer die jeweils am Lenkhandrad 11 notwendige Handkraft vermindernde Stellkraft erzeugt.

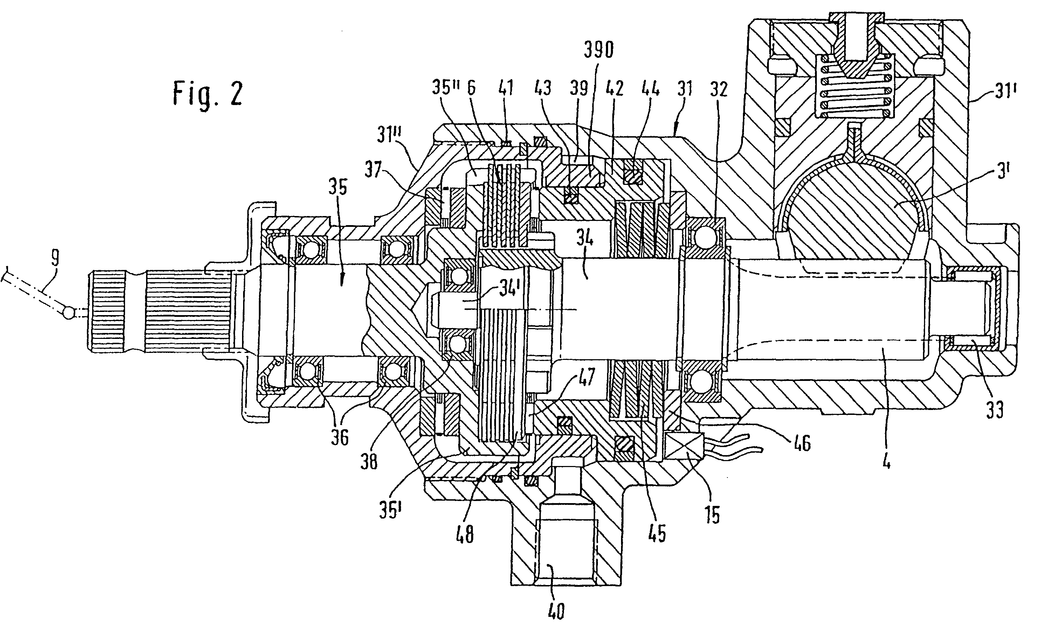

Fig. 2 zeigt nun eine besonders bevorzugte Ausführungsform der Kupplung 6, wobei vorgesehen ist, diese Kupplung zusammen mit dem Ritzel 4 sowie dem damit kämmenden Teil der Zahnstange 3' in einer gemeinsamen Gehäuseanordnung unterzubringen.

In grundsätzlich herkömmlicher Weise ist in Fig. 2 die Zahnstange 3' in einem Teil 31' eines Gehäuses 31 verschiebbar geführt, welches auch das mit der Zahnstange 3' kämmende Ritzel 4 sowie dessen Lager 32 und 33 aufnimmt.

Auf der vom Ritzel 4 abgewandten Seite des Lagers 32 schließt sich an das Ritzel 4 eine Ritzelwelle 34 einstückig an, an deren freiem Ende ein axialer Fortsatz 34' angebracht ist. Im übrigen ist der dem Fortsatz 34' benachbarte Endbereich der Ritzelwelle 34 unrund ausgebildet, beispielsweise mit axialen Stegen versehen, so daß sich die Ritzelwelle 34 drehfest mit auf dem unrunden Abschnitt axial verschiebbaren Innenlamellen der Kupplung 6 koppeln läßt.

Gleichachsig zur Ritzelwelle 34 ist in einem an den Gehäuseteil 31' anschließenden Gehäuseteil 31" eine Welle 35 drehgelagert, welche mit der in Fig. 2 nicht dargestellten Welle 9 (vgl. Fig. 1) drehfest verbunden ist.

Die Welle 35 ist im Gehäuseteil 31" mit Lagern 36 und 37 radial und axial gelagert, wobei das Axiallager 37 eine Verschiebung der Welle 35 nach links und das linke Lager 36 in Verbindung mit einem auf der Welle 35 angeordneten Sprengring und einer Ringstufe am Gehäuseteil 31" eine Verschiebung der Welle 35 nach rechts verhindern. Darüber hinaus nimmt die Welle 35 in einem glockenähnlichen, in Fig. 2 rechten Endbereich ein Radiallager 38 auf, mit dem die Ritzelwelle 34 über ihren Fortsatz 34' an der Welle 35 radial gelagert ist.

Im übrigen wird das rechte Ende der Welle 35 von einem an ihr angeformten Hohlrad 35' gebildet, welches die Lamellen der Kupplung 6 von radial außen umschließt und mit den Außenlamellen dieser Kupplung drehfest, jedoch axial beweglich verbunden ist. Dazu ist im Hohlrad 35' ein Axialschlitz 35" angeordnet, in den die Außenlamellen mit entsprechenden radialen Fortsätzen eingreifen. Gegebenenfalls können auch mehrfach angeordnete Schlitze 35" mit entsprechend mehrfach angeordneten Radialfortsätzen an den Außenlamellen zusammenwirken.

Im Gehäuseteil 31' ist ein eine zylinderartige Hülse 390 umschließender Ringraum 39 ausgebildet, der über einen Hydraulikanschluß 40 mit dem nur in Fig. 1 dargestellten Ventil 16 verbindbar ist. Dieser Ringraum 39 wird am in Fig. 2 linken Ende durch einen den Spalt zwischen dem Gehäuseteil 31' und der Hülse 390 absperrenden Dichtring 41 abgeschlossen. Das andere, stirnseitig offene Ende des Ringraumes 39 wird durch einen Ringkolben 42 abgeschlossen, der an einem Abschnitt mit geringerem Außendurchmesser mittels einer Kolbendichtung 43 gegenüber der Innenumfangsfläche der Hülse 390 und an einem Abschnitt mit größeren Außendurchmesser gegenüber der Innenumfangsfläche des Gehäuseteiles 31' mit einer weiteren Kolbendichtung 44 abgedichtet ist.

Der Ringkolben 42 wird von einem ringförmigen Tellerfederpaket 45, welches konzentrisch zur Ritzelwelle 34 angeordnet ist, in Fig. 2 nach links gedrängt. Das Tellerfederpaket 45 stützt sich einerseits an einem Widerlagerring 46 axial ab, welcher innerhalb einer Ringstufe im Innenraum des Gehäuseteiles 31' angeordnet ist und außerdem dazu dient, die äußere Lagerschale des Lagers 32 des Ritzels 4 innerhalb einer Ringstufe des Gehäuseteiles 31' axial festzuhalten. Das andere Ende des Tellerfederpaketes 45 ist gegen eine Ringstufe am Innenumfang des Ringkolbens 42 gespannt.

Am in Fig. 2 linken Stirnende des Ringkolbens 42 ist ein Axiallager 47 sowie eine vom Ringkolben 42 durch das Axiallager 47 getrennte Druckplatte 48 angeordnet, die bei drucklosem Ringraum 39 die vom Tellerfederpaket 45 auf den Ringkolben 42 ausgeübten Druckkräfte auf das Lamellenpaket der Kupplung 6 überträgt, so daß die Außen- und Innenlamellen der Kupplung 6 axial fest aufeinander gedrängt werden und die Kupplung 6 schließt, wobei die auf die Kupplung 6 ausgeübten axialen Druckkräfte über das Axiallager 37 auf das Gehäuseteil 31" abgetragen werden.

Falls in den Ringraum 39, der zusammen mit dem Ringkolben 42 das Verdrängeraggregat der Fig. 1 bildet, Hydraulikmedium mit hinreichendem Druck eingespeist wird, wird der Ringkolben 42 gegen die Kraft des Tellerfederpaketes 45 in Fig. 2 nach rechts verschoben, so daß die Kupplung 6 öffnet. Die nach rechts verschobene Endlage des Ringkolbens 42 wird vom Sensor 15 erfaßt und der Regelung 28 (vgl. Fig. 1) gemeldet.

Aus der Fig. 2 ist ersichtlich, daß für die Kupplung 6 insgesamt nur wenig Raum benötigt wird und das die Kupplung 6 aufnehmende Gehäuse 31 in ein zur Aufnahme von Ritzel 4 und Zahnstange 3' ohnehin vorgesehenes Gehäuse integriert sein kann.

Die Regelanordnung 28 kann mit weiteren, nicht dargestellten Meßgebern und/oder Rechnern kommunizieren, um zusätzliche Parameter zu berücksichtigen.

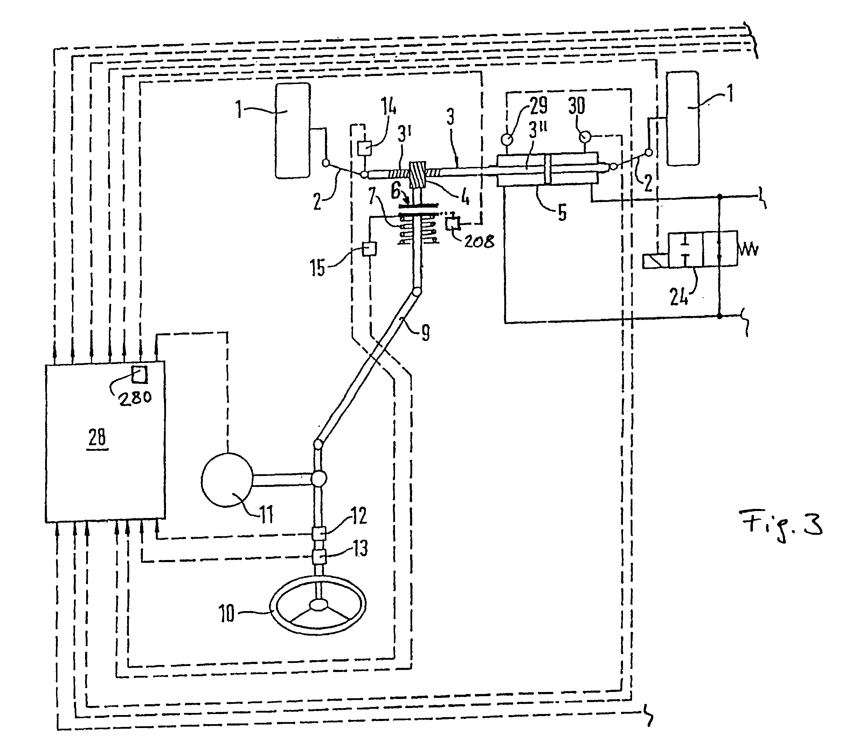

Bei der Ausführungsform der Fig. 3 wird die Kupplung 6 gegen die Kraft der Schließfederung 7 durch ein nicht selbsthemmendes Elektromagnet-Aggregat 208 geöffnet, sobald dieses Aggregat 208 entsprechend elektrisch bestromt wird.

Die Regelanordnung 28 umfaßt eine Meßschaltung 280, mit der Parameter der Bestromung des Elektromagnet-Aggregates 208 erfaßt werden können, beispielsweise die elektrische Spannung und Stromstärke des zum Elektromagnet-Aggregat 208 geleiteten elektrischen Versorgungstromes sowie gegebenenfalls auch der Induktivität des Elektromagnet-Aggregates 208.

Sobald die Stromstärke bzw. elektrische Leistung des Versorgungsstromes des Elektromagnet-Aggregates 208 einen vorgegebenen Schwellwert überschreitet, kann die Regelschaltung 28 dies als Signal dafür auswerten, daß die Kupplung 6 durch das Elektromagnet-Aggregat 208 in offener Stellung gehalten wird, wobei zusätzlich auch ein Signal des Sensors 15 für geöffnete Kupplung vorliegen kann.

Aus Sicherheitsgründen kann vorgesehen sein, daß der Zustand "geöffnete Kupplung" nur dann als gegeben gilt, wenn die Meßschaltung 280 und der Sensor 15 einander entsprechende Signale abgeben.

Sollte dies nicht der Fall sein bzw. sollte das Signal der Meßschaltung 280 und/oder des Sensors 15 auf eine geschlossene oder schließende Kupplung hindeuten, wird das Lenkungssystem sofort auf anormalen Betrieb bzw. Notfallbetrieb umgeschaltet, bei dem die elektrische Stromversorgung des Elektromagnet-Aggregates 208 unterbrochen bzw. ausgeschaltet ist und die Kupplung 6 dementsprechend ihren durch die Federung 7 geschlossenen Zustand einnimmt.

Die Erfindung ist nicht auf Lenksysteme mit Lenkhandrädern beschränkt. Grundsätzlich kann anstelle eines Lenkhandrades auch eine prinzipiell beliebige Lenkhandhabe, z.B. ein Steuerknüppel, angeordnet sein.

## Patentansprüche

1. Lenksystem für ein nicht spurgebundenes Kraftfahrzeug, dessen gelenkte Fahrzeugräder
- bei Normalbetrieb mit einer Lenkhandhabe bzw. einem Lenkhandrad (10) über eine sich ständig auf korrekte Funktion überprüfende elektronische Regelanordnung (28) wirkungsmäßig verbunden sind, welche einen mit den gelenkten Fahrzeugrädern (1) zu deren Lenkverstellung verbundenen Lenkstellantrieb (5) regelt und dazu mit einem von der Lenkhandhabe bzw. vom Lenkhandrad betätigten Lenkwinkel-Sollwertgeber (13) sowie einem mit den gelenkten Fahrzeugrädern betätigten Lenkwinkel-Istwertgeber (14) verbunden ist und vorzugsweise auch einen mit der Lenkhandhabe bzw. dem Lenkhandrad zur Simulation eines Lenkwiderstandes verbundenen Handkraftsteller (11) regelt und dazu mit einem übertragene Kräfte zwischen Lenkstellantrieb und gelenkten Fahrzeugrädern erfassenden Handkraft-Sollwertgeber (29,30) sowie einem übertragene Kräfte zwischen Handkraftsteller und Lenkhandrad erfassenden Handkraft-Istwertgeber (12) verbunden ist,
- bei anormalem Betrieb bzw. Notfallbetrieb zur Lenkverstellung mit der Lenkhandhabe bzw. dem Lenkhandrad mechanisch zwangsgekoppelt werden, indem eine bei Normalbetrieb offene Kupplung (6) in einer zwischen Lenkhandhabe bzw. Lenkhandrad und gelenkten Fahrzeugrädern angeordneten mechanischen Lenkgetriebeanordnung (3,4,9) schließt,
**dadurch gekennzeichnet,**
**daß** eine Sensorik (15) zur Erfassung des geöffneten Zustandes der Kupplung (6) vorhanden ist.

2. Lenksystem nach Anspruch 1,
**dadurch gekennzeichnet,**
**daß** automatisch auf anormalen Betrieb bzw. Notfallbetrieb umgeschaltet wird, wenn bei Normalbetrieb ein Signal für den geöffneten Zustand der Kupplung (6) verschwindet und/oder ein Signal für geschlossene bzw. schließende Kupplung auftritt.

3. Lenksystem nach Anspruch 1 oder 2,
**dadurch gekennzeichnet,**
**daß** die Kupplung (6) ständig von einer Schließkraft (7) beaufschlagt wird und durch einen durch Energiezufuhr wirksam werdenden Aktuator (208,8) gegen die Schließkraft auftrennbar ist.

4. Lenksystem nach einem der Ansprüche 1 bis 3,
**dadurch gekennzeichnet,**
**daß** die Kupplung (6) durch einen elektromagnetischen Aktuator (208) betätigt bzw. geöffnet wird.

5. Lenksystem nach einem der Ansprüche 1 bis 3,
**dadurch gekennzeichnet,**
**daß** die Kupplung (6) durch einen fluidischen Aktuator (8) betätigt bzw. geöffnet wird.

6. Lenksystem nach einem der Ansprüche 1 bis 5,
**dadurch gekennzeichnet,**
**daß** die Sensorik (15,280) zur Erzeugung eines Signales für geöffnete Kupplung (6) einen zum Öffnen der Kupplung notwendigen Betriebszustand des Aktuators (208,8) erfaßt. schiebbar ist.

7. Lenksystem nach einem der Ansprüche 1 bis 6,
**dadurch gekennzeichnet,**
**daß** die Lenkgetriebeanordnung ein den lenkbaren Fahrzeugrädern zugeordnetes bzw. benachbartes Getriebe (3',4) mit einem eingangsseitigen und einem ausgangsseitigen Wellenteil (34,35) aufweist und die Kupplung (6) in einem Lagergehäuse (31) der Wellenteile (34,35) oder in einem auch die Lager eines an einem Wellenteil (34) angeordneten Zahnrades bzw. Ritzels (4) umfassenden Gehäuseaggregat angeordnet ist, und daß das Gehäuse bzw. Gehäuseaggregat ein die Kupplung (6) in Schließrichtung beaufschlagendes Federaggregat (7,45) sowie ein hydraulisches Verdrängeraggregat (8,39,42) mit einem als kraftübertragendes Teil zwischen Kupplung und Federaggregat angeordneten Verdränger (42) aufnimmt, welcher durch Einspeisung von hydraulischem Druck in das Verdrängeraggregat unter Öffnung der Kupplung gegen die Federanordnung verschiebbar ist.

8. Lenksystem nach einem der Ansprüche 1 bis 7,
**dadurch gekennzeichnet,**
**daß** die Lenkgetriebeanordnung als Zahnstangenlenkung ausgebildet ist und die Kupplung (6) zwischen einer Ritzelwelle (34) und einer mit dem Lenkhandrad (10) verbindbaren Welle (35) in einem das Ritzel (4) aufnehmenden Gehäuse (31) untergebracht ist.

9. Lenksystem nach einem der Ansprüche 1 bis 8,
**dadurch gekennzeichnet,**
**daß** die Kupplung (6) im wesentlichen nur kraftschlüssig arbeitet.

10. Lenksystem nach Anspruch 9,
**dadurch gekennzeichnet,**
**daß** die Kupplung (6) als Lamellenkupplung ausgebildet ist, deren Lamellen konzentrisch zu einem Wellenteil (34) angeordnet sind und mit einem zum Wellenteil konzentrischen Ringkolben (42) zusammenwirken, der mittels eines zum Wellenteil konzentrischen Tellerfederpaketes (45) axial gegen die Lamellen spannbar ist, welche sich dabei auf einer Widerlagerfläche an einem weiteren Wellenteil (35) abstützen.

11. Lenksystem nach Anspruch 10,
**dadurch gekennzeichnet,**
**daß** die Lamellen der Kupplung (6) innerhalb eines am weiteren Wellenteil (35) angeordneten Hohlrades (35') untergebracht sind, wobei das Hohlrad drehfest, jedoch axial beweglich, mit Außenlamellen der Kupplung und das eine Wellenteil (34) drehfest, jedoch axial beweglich mit Innenlamellen der Kupplung gekoppelt ist.

12. Lenksystem nach Anspruch 10 oder 11,
**dadurch gekennzeichnet,**
**daß** zwischen Ringkolben (42) und den Kupplungslamellen ein Axiailager (47) angeordnet ist.

13. Lenksystem nach einem der Ansprüche 10 bis 12,
**dadurch gekennzeichnet,**
**daß** zwischen Gehäuseteilen (31',31") ein am einen Ende von den Gehäuseteilen abgeschlossener Ringraum (39) angeordnet ist, welcher am anderen Ende durch den Ringkolben (42) abgeschlossen wird, wobei im Ringraum wirksamer hydraulischer Druck den Ringkolben gegen die Kraft des Tellerfederpaketes (45) zu verschieben sucht.

14. Lenksystem nach einem der Ansprüche 1 bis 13,
**dadurch gekennzeichnet,**
**daß** das hydraulische Verdrängeraggregat (8,39,42) der Kupplung (6) über ein Ventil (16) ständig drucklos gehalten bzw. mit einem relativ drucklosen Hydraulikreservoir (17) verbunden wird, solange der Druck einer dem Verdrängeraggregat zugeordneten Druckquelle (18) unter einem Schwellwert liegt.

## Claims

1. Steering system for a non-track-bound motor vehicle, the steered vehicle wheels of which
- during normal operation, are actively connected to a steering handle or a steering wheel (10) via an electronic control system (28) running constant checks for correct functioning, which regulates a steering actuator (5) connected to the steered vehicle wheels (1) to effect a steering adjustment thereof and which is connected to a steering angle-desired value transmitter (13) operated in conjunction with the steering handle or steering wheel as well as a steering angle-actual value transmitter (14) operated in conjunction with the steered vehicle wheels for this purpose and preferably also controls a manual force adjuster (11) connected to the steering handle or steering wheel to simulate a steering resistance and is connected for this purpose to a manual force-desired value transmitter (29, 30) which detects forces transmitted between steering actuator and steered vehicle wheels as well as a manual force-actual value transmitter (12) which detects a force transmitted between manual force adjuster and steering wheel,
- during abnormal operation or during emergency operation, is mechanically forcibly coupled with the steering handle or the steering wheel in order to adjust the steering, whereby a clutch (6) in a mechanical steering gear assembly (3, 4, 9) disposed between the steering handle or steering wheel and steered vehicle wheels, which is open during normal operation, closes,
**characterised in that**
a sensor system (15) is provided in order to detect the opened state of the clutch (6).

2. Steering system as claimed in claim 1,
**characterised in that**
a switchover to abnormal operation or emergency operation is automatically effected if, during normal operation, a signal indicating the opened state of the clutch (6) disappears and/or a signal indicating a closed or closing clutch appears.

3. Steering system as claimed in claim 1 or 2,
**characterised in that**
the clutch (6) is constantly biassed by a closing force (7) and can be counteracted by an actuator (208, 8) which becomes active and applies energy against the closing force.

4. Steering system as claimed in one of claims 1 to 3,
**characterised in that**
the clutch (6) is operated or opened by an electromagnetic actuator (208).

5. Steering system as claimed in one of claims 1 to 3,
**characterised in that**
the clutch (6) is operated or opened by a fluid-operated actuator (8).

6. Steering system as claimed in one of claims 1 to 5,
**characterised in that**
in order to generate a signal indicating an open clutch (6), the sensor system (15, 280) detects an operating state of the actuator (208, 8) necessary to open the clutch.

7. Steering system as claimed in one of claims 1 to 6,
**characterised in that**
the steering gear assembly has a gear mechanism (3', 4) with an input-side and an output-side shaft part (34, 35) co-operating with or adjacent to the steerable vehicle wheels and the clutch (6) is disposed in a bearing housing (31) of the shaft parts (34, 35) or in a housing unit also incorporating the bearings of a gear or pinion (4) disposed on a shaft part (34) and **in that** the housing or housing unit accommodates a spring mechanism (7, 45) biassing the clutch (6) in the closing direction as well as a hydraulic displacement unit (8, 39, 42) with a displacer (42) , designed to transmit force between clutch and spring mechanism, which is displaceable against the spring mechanism when hydraulic pressure is delivered to the displacement unit causing the clutch to open.

8. Steering system as claimed in one of claims 1 to 7,
**characterised in that**
the steering gear assembly is designed as a rack and pinion steering system and the clutch (6) is mounted between a pinion shaft (34) and a shaft (35) linkable to the steering wheel (10) in a housing (31) enclosing the pinion (4).

9. Steering system as claimed in one of claims 1 to 8,
**characterised in that**
the clutch (6) essentially operates on a friction basis only.

10. Steering system as claimed in claim 9,
**characterised in that**
the clutch (6) is provided in the form of a disc clutch, the discs of which are disposed concentrically with a shaft part (34) and co-operate with an annular piston (42) concentric with the shaft part which can be axially biassed against the discs by means of a plate spring pack (45) disposed concentrically with the shaft part, so as to be supported on an abutment surface of another shaft part (35).

11. Steering system as claimed in claim 10,
**characterised in that**
the discs of the clutch (6) are mounted inside an annulus (35') arranged on the other shaft part (35), the annulus being prevented from rotating but being axially displaceable with outer discs of the clutch, and a shaft part (34) is coupled with inner discs of the clutch so as to be prevented from rotating but axially displaceable.

12. Steering system as claimed in claim 10 or 11,
**characterised in that**
a thrust bearing (47) is arranged between annular piston (42) and the clutch discs.

13. Steering system as claimed in one of claims 10 to 12,
**characterised in that**
an annular chamber (39) is disposed between housing parts (31', 31") and closed off from the housing parts at one end, being closed off by the annular piston (42) at the other end, whereby hydraulic pressure acting in the annular chamber seeks to displace the annular piston against the force of the plate spring pack (45).

14. Steering system as claimed in one of claims 1 to 13,
**characterised in that**
the hydraulic displacement unit (8, 39, 42) of the clutch (6) is maintained constantly without pressure via a valve (16) or is connected to a relatively pressureless hydraulic reservoir (17) as long as the pressure of a pressure source (18) co-operating with the displacement unit lies below a threshold value.

## Revendications

1. Système de direction pour un véhicule automobile non lié à la voie, véhicule automobile dont les roues dirigées
- en fonctionnement normal, sont reliées, fonctionnellement, par un dispositif de régulation électronique (28) se contrôlant constamment sur la fonction correcte, à une manette de direction ou à un volant de direction (10), lequel dispositif de régulation régule un mécanisme de commande de direction (5) relié aux roues dirigées (1) du véhicule pour leur réglage de direction et, pour ce faire, est relié à un indicateur (13) de valeurs de consigne d'angle de direction actionné par la manette de direction ou par le volant de direction, ainsi qu'à un indicateur (14) de valeurs réelles d'angle de direction actionné avec les roues dirigées du véhicule et, de préférence, régule également un actionneur de la force manuelle (11) relié à la manette de direction ou au volant de direction, pour la simulation d'une résistance de direction et, pour ce faire, est relié à un indicateur (29, 30) de valeurs de consigne de la force manuelle détectant des forces transmises entre le mécanisme de commande de direction et les roues dirigées du véhicule, ainsi qu'à un indicateur (12) de valeurs réelles de la force manuelle détectant des forces transmises entre l'actionneur de la force manuelle et le volant de direction,
- en fonctionnement normal ou en fonctionnement en cas d'urgence, sont accouplées de force mécaniquement à la manette de direction ou au volant de direction pour le réglage de direction, tandis qu'un accouplement (6) ouvert, en fonctionnement normal, se ferme dans une structure de direction mécanique (3, 4, 9) disposée entre la manette de direction ou le volant de direction et les roues dirigées du véhicule,
**caractérisé en ce qu'**un ensemble de capteurs (15) est présent pour la détection de l'état ouvert de l'accouplement (6).

2. Système de direction selon la revendication 1, **caractérisé en ce que** le système est basculé automatiquement en fonctionnement anormal ou en fonctionnement d'urgence lorsque, en fonctionnement normal, un signal pour l'état ouvert de l'accouplement (6) disparaît et/ou lorsqu'un signal apparaît pour un accouplement fermé ou se fermant.

3. Système de direction selon la revendication 1 ou 2, **caractérisé en ce que** l'accouplement (6) est sollicité constamment par une force de fermeture (7) et est désaccouplable au moyen d'un actionneur (208, 8) devenant actif par alimentation en énergie, en s'opposant à la force de fermeture.

4. Système de direction selon l'une quelconque des revendications 1 à 3, **caractérisé en ce que** l'accouplement (6) peut être actionné ou ouvert par un actionneur électromagnétique (208).

5. Système de direction selon l'une quelconque des revendications 1 à 3, **caractérisé en ce que** l'accouplement (6) est actionné ou ouvert par un actionneur (8) fonctionnant avec un fluide.

6. Système de direction selon l'une quelconque des revendications 1 à 5, **caractérisé en ce que** l'ensemble des capteurs (15, 280) détecte un état de fonctionnement de l'actionneur (208, 8) nécessaire pour l'ouverture de l'accouplement, pour produire un signal pour l'accouplement ouvert (6).

7. Système de direction selon l'une quelconque des revendications 1 à 6, **caractérisé en ce que** la structure du mécanisme de direction comprend une transmission (3', 4) associée ou adjacente aux roues orientables du véhicule, comprenant une partie d'arbre (34, 35) côté entrée et côté sortie, et l'accouplement (6) est disposé dans un boîtier de paliers (31) des parties d'arbre (34, 35) ou dans un ensemble formant boîtier comprenant également les paliers d'une roue dentée ou d'un pignon (4) disposé sur une partie d'arbre (34), et **en ce que** le boîtier ou l'ensemble formant boîtier loge un ensemble à ressorts (7, 45) sollicitant l'accouplement (6) dans la direction de fermeture, ainsi qu'un ensemble formant un organe de déplacement hydraulique (8, 39, 42) comprenant un organe de déplacement (42) disposé, comme une pièce transmettant des forces, entre l'accouplement et l'ensemble à ressorts, lequel organe de déplacement est mobile par alimentation en pression hydraulique dans l'ensemble formant un organe de déplacement, sous l'effet de l'ouverture de l'accouplement s'opposant à la structure à ressorts.

8. Système de direction selon l'une quelconque des revendications 1 à 7, **caractérisé en ce que** la structure du mécanisme de direction est configurée comme une direction à crémaillère et l'accouplement (6) est logé dans un boîtier (31) recevant le pignon (4), entre un arbre de pignon (34) et un arbre (35) pouvant être relié au volant de direction (10).

9. Système de direction selon l'une quelconque des revendications 1 à 8, **caractérisé en ce que** l'accouplement (6) ne fonctionne essentiellement que par action de force.

10. Système de direction selon la revendication 9, **caractérisé en ce que** l'accouplement (6) est configuré comme un embrayage à disques dont les disques sont disposés de façon concentrique par rapport à une partie d'arbre (34) et fonctionnent en association avec un piston annulaire (42) concentrique par rapport à la partie d'arbre, lequel piston annulaire peut être serré axialement contre les disques au moyen d'un paquet de rondelles Belleville (45) concentrique par rapport à la partie d'arbre, lesquels disques, ce faisant, portent sur une surface d'appui au niveau d'une autre partie d'arbre (35).

11. Système de direction selon la revendication 10, **caractérisé en ce que** les disques de l'embrayage (6) sont logés à l'intérieur d'une roue à denture intérieure (35') disposée sur l'autre partie d'arbre (35), où la roue à denture intérieure, solidaire en rotation, mais mobile axialement, est accouplée à des disques extérieurs de l'embrayage, et la partie d'arbre (34), solidaire en rotation, mais mobile axialement, est accouplée à des disques intérieurs de l'embrayage.

12. Système de direction selon la revendication 10 ou 11, **caractérisé en ce qu'**un palier axial (47) est disposé entre le piston annulaire (42) et les disques d'embrayage.

13. Système de direction selon l'une quelconque des revendications 10 à 12, **caractérisé en ce qu'**un espace annulaire fermé (39) est disposé, entre des parties de boîtier (31', 31"), au niveau de l'une des extrémités des parties du boîtier, lequel espace annulaire est fermé par le piston annulaire (42) au niveau de l'autre extrémité où, dans l'espace annulaire, une pression hydraulique active cherche à déplacer le piston annulaire en s'opposant à la force du paquet de rondelles Belleville (45).

14. Système de direction selon l'une quelconque des revendications 1 à 13, **caractérisé en ce que** l'ensemble formant un organe de déplacement hydraulique (8, 39, 42) de l'embrayage (6) est relié à un réservoir hydraulique (17) relativement sans pression ou maintenu constamment sans pression par une soupape (16), aussi longtemps que la pression d'une source de pression (18) associée à l'ensemble formant un organe de déplacement est au-dessous d'une valeur seuil.
